# EUROPEAN PATENT SPECIFICATION

(11) **EP 4 553 467 B1**
(45) Date of publication and mention of the grant of the patent: **25.03.2026**
(21) Application number: 23209350.0
(22) Date of filing: 13.11.2023
(51) Int. Cl.: G01L 9/00, G01L 19/06

(54) **PROTECTIVE LAYER FOR PROTECTION OF PRESSURE SENSORS**
SCHUTZSCHICHT ZUM SCHUTZ VON DRUCKSENSOREN
COUCHE DE PROTECTION POUR LA PROTECTION DE CAPTEURS DE PRESSION

(43) Date of publication of application: 14.05.2025
(73) Proprietor: Melexis Technologies NV, 3980 Tessenderlo (BE)
(72) Inventor: DIDDEN, Jeroen, 3980 Tessenderlo (BE)
(74) Representative: Winger

(56) References cited:
- US-A1- 2018 306 659
- US-B2- 6 512 255
- US-B2- 9 733 140

## Description

### Field of the invention

The invention relates to the field of pressure sensors. More specifically it relates to pressure sensors for harsh and corrosive environments.

### Background of the invention

Pressure sensors are provided as packaged sensors. The package can be formed e.g. by moulding and a cavity is formed into the package. The pressure sensing die may be placed inside the cavity after the moulding process and it may be e.g. glued to the bottom of the cavity. A cavity in the package communicates the sensing die to the environment whose pressure needs to be measured. In several applications, the pressure sensor is located in an environment where it is exposed to harsh chemicals, e.g. in exhaust gas. The harsh chemicals in the environment may corrode and damage parts of the sensing die electronics, e.g. wire-bonding wires, bonding pads, or parts of the leadframe that are left exposed, unless they are protected. Usually, a gel is added to cover the delicate parts of the sensor in the cavity, as disclosed in EP3211394B1.

Document US 2018/0306659 A1 discloses a pressure sensor mounted on a PCT and a cavity defined by a membrane and a gel or liquid filling the cavity. The gel or liquid is non-compressible and the device may include a fill hole, to reduce the presence of air bubbles and the like, which may affect the transmission of the outside pressure through the gel.

Analogously Document US6512255B2 discloses a semiconductor pressure sensor that prevents growth of bubble with a protective member covering the sensor chip and wires. The material of the membrane is chosen with a predetermined saturated swelling coefficient when using in a gasoline environment.

Document US 9733140B2 discloses a metal container and a pressure sensor inside the container, which can be filled with a liquid for transmitting pressure from the outside of the container to the sensor. The container is closed by an inner and outer diaphragm forming a double diaphragm, each side having different thermal expansion coefficients to correct for volume changes due to temperature.

### Summary of the invention

It is an object of embodiments of the present invention to provide a pressure sensor with effective protection against harsh conditions and corrosive chemicals of the environment where pressure needs to be read.

In a first aspect, the present invention provides a pressure sensor as defined in claim 1.

It is an advantage of embodiments of the present invention that the diffusion rate of chemicals from harsh environments towards the delicate sensing die is reduced.

In some embodiments of the present invention, the sensing die comprises a membrane. It is an advantage of embodiments of the present invention that total or partial pressure sensors can be protected.

In some embodiments of the present invention, the layer of polymer is a cured glue. It is an advantage of embodiments of the present invention that a glue can be easily provided.

In some embodiments of the present invention, the gel coating has a thickness of at least 150 micrometers measured between the sensing die and the layer of polymer.

It is an advantage of embodiments of the present invention that good protection against chemicals can be provided without sacrificing the compactness of the device.

In some embodiments of the present invention, the layer of polymer has a thickness of 10 micrometers or more up to 50 micrometers.

It is an advantage of embodiments of the present invention that the sensitivity of the pressure sensor (e.g. of a sensing element present in the sensing die of the sensor) is not significantly reduced.

The layer of the polymer forms a pattern on the gel coating, optionally leaving a portion of the external surface of the gel in contact with the environment.

It is an advantage of embodiments of the present invention that stress gradients and/or differences due to different expansion, caused by temperature or chemical swelling, are mitigated.

In a second aspect, the present invention provides a method of manufacturing the sensor of the first aspect of the present invention as defined in claim 8.

It is an advantage of embodiments of the present invention that a chemically resistant pressure sensor, can be obtained.

In some embodiments of the present invention, providing a layer of polymer comprises providing the polymer using a dispenser needle for microelectronics assembly.

It is an advantage that highly precise dispensing equipment can be used with required accuracy.

In some embodiments of the present invention, the method further comprises curing the adhesive layer.

It is an additional advantage that standard methods can be used for distributing glue, for example on packaging methods, e.g. glue needles for distributing glue between chip and lead frame, or between chip and mold compound. It is an additional advantage that a preexisting assembly toolbox can be used.

Providing a layer of polymer comprises patterning the layer of the polymer.

It is an advantage that different patterns can be provided for compensation of expansions with chemical or thermal origin.

For example, patterning the layer of polymer comprises providing the layer on a plurality of regions covering at least part of the top projection of the gel coating. For example, the region corresponding to the top projection of the coating covering the sensing die comprises a thicker layer of polymer than the rest of the regions.

It is an advantage that diffusion of harmful chemicals from the gel surface to the sensing substrate is further reduced, with reduced impact on the sensitivity and reduced use of adhesive.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG 1 illustrates an example of the present invention, which is outside the scope of the claims, and FIG 2 illustrates an embodiment of the present invention with the sensing die laid out next to the processing substrate.
FIG 3 illustrates an alternative of the present invention with the sensing die on top of the processing substrate.
FIG 4 is a flowchart of a method in accordance with embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "sensing die", reference is made to, for example, a semiconductor die. The sensing die may comprise one or more semiconductor layers, for instance a substrate layer and a membrane layer which are bonded together. The sensing die comprises one or more sensing elements which provide signal in response to applied pressure. For example, the sensing die may comprise a membrane, which deforms due to the pressure applied on the membrane. To measure the deformation of the membrane, the die comprises one or more sensing elements, which change their electrical property due to the deformation of the membrane. The sensing element may be for instance a piezo resistor, implemented in or on the membrane. Other sensing elements are possible as well. Said element(s) generate a signal which can be directed from the sensing die to a sensor interface circuit which may be integrated also on the same substrate or may be provided on a different substrate, for example a different semiconductor die including application-specific integrated circuitry, or ASIC for short. To measure the change in electrical properties of the sensing elements, the sensor interface integrated circuit can be used to provide required supply voltage/current to the sensing die and to readout the signal from the sensing elements. Therefore, a readout circuit is electrically connected to the sensing die to measure the change in electrical properties of the sensing elements. The readout circuit may comprise signal conditioning circuit and/or Analog-to-Digital Converter(s) (ADC).

Packaged sensors are used to monitor harsh environments, for example environments including exhaust gases and the like. These sensors require harsh media robustness to prevent, for as long and as possible, deterioration of material inside the sensor caused by contact with harsh chemicals. In particular, packaged pressure sensors are used to monitor pressure in environments with harsh chemical conditions. The membrane of the sensing die needs to be exposed to the stimulus (pressure) in the environment. However, if directly exposed to the environment, the sensing die and parts thereof (contacts, conductive tracks, etc.) would corrode and become damaged relatively fast.

Typically, gel coatings are applied on delicate elements that may be exposed to the environment. These coatings act as a protective barrier. However, gels also have their limits in increasingly demanding environments, and chemicals may diffuse through the gel.

The present invention proposes an additional protective layer on top of the gel coating to limit or prevent chemical impact on the pressure sensor. The additional layer decreases the rate of diffusion of harsh media towards these vulnerable components in the sensor cavity.

In a first aspect, the present invention relates to a packaged pressure sensor including a sensing die wherein the membrane of the sensing die deforms due to the pressure from the environment through a coating, without direct contact with the environment. The coating allows the transmission of the pressure to be measured from the environment. The coating is a flexible coating. The coating is formed by a material in the form of a gel. The gel may be polymeric, for example. The coating in form of gel (or gel coating) is flexible so it allows transmission of the environmental pressure, and changes thereof. The gel, which includes a cross-linked polymer, prevents the contact of chemicals in the environment with at least the sensing die covered by the coating. It also may protect other elements, such as conductors like conducting tracks, interposers, ASICs, etc.

The package material forms a cavity with fluid communication to the environment, wherein the pressure sensitive membrane is located in the cavity. The gel coating is provided inside said cavity, covering the sensing die. The cavity may include not only the sensing die, but also and optionally other elements such as other substrates, conductive tracks, contacts or contact pads, etc. For example, pads may comprise materials susceptible to corrosion, such as metals (aluminum, copper, etc.)

As mentioned earlier, despite the protection of the gel, chemicals may diffuse through the gel and reach these delicate elements, producing corrosion and eventually damaging the sensor.

The present invention provides an additional layer of material on the top surface of the gel coating, i.e. the surface of the gel coating which receives the pressure from the environment. The additional layer comprises polymeric materials different from the gel, which provides a good barrier to chemical diffusion. The polymer is an adhesive with a higher degree of cross-linking than the gel coating. The additional layer acts as a barrier to pollutants and chemicals from the environment. It reduces or prevents diffusion of chemicals, since the cross-linking density of the adhesive is higher than that of the gel. However, the layer is typically much thinner than the gel coating, to avoid an unacceptable sensitivity reduction.

In some embodiments, the adhesive comprises functional groups which chemically bind to the molecules of the top surface of the gel, upon contact. In embodiments of the present invention the adhesive is glue.

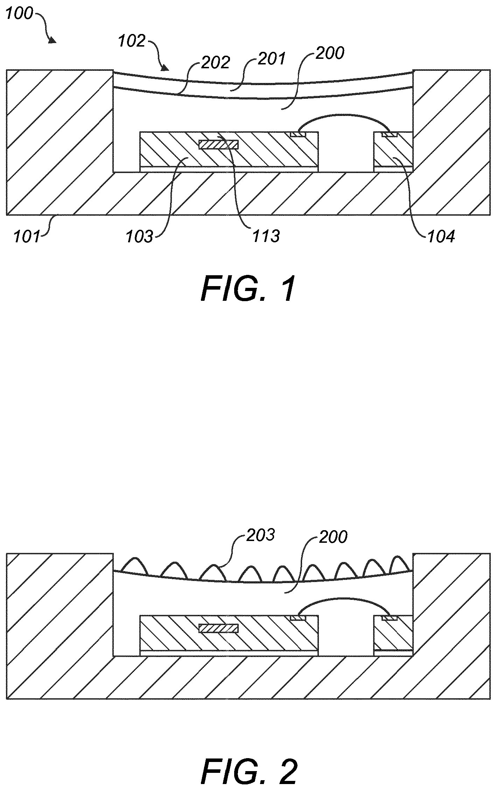

FIG 1 shows a packaged sensor 100 comprising packaging material forming a package 101 with a cavity 102 and a sensing die 103, for example a MEMS e.g. including a membrane 113, at the bottom of the cavity. A processing unit 104 such as an ASIC sensor interface circuit is also partially inside the cavity, wherein a part of the ASIC is embedded in the package 101. A gel coating 200 is provided in the cavity, covering the MEMS. A full additional layer 201 is provided on the surface 202 or side of the gel which receives the pressure, which is the surface facing the opening of the cavity 102. The additional layer 201 completely covers the gel coating 200 and prevents the direct contact between the environment and the gel.

The additional layer 201 is provided so that the elasticity of the underlaying gel is not negatively affected. For example, the additional layer may be thin enough compared to the gel. For example, the additional layer may be e.g. 1 micron or more up to 100 microns.

The gel includes typically a fluid phase and cross-linked polymers. The additional layer being an adhesive layer has higher cross-link density than the gel which acts as additional barrier deterring chemicals from the environment from reaching the gel. As an additional advantage of the additional layer, since there is additional protection, the thickness of the gel coating could be potentially reduced slightly.

Since the gel coating and the additional layer comprise different materials, typically they will suffer from stress at least at the interface between the two. These may stem from differences of expansion due to temperature or by chemical swelling. The stress gradients can be mitigated by providing a patterned additional layer on the surface facing the opening of the cavity, or 'external surface', or 'pressure receiving surface', which is the surface of the gel facing away from the sensing die. This additional patterned layer may not cover the whole external surface of the gel coating.

FIG 2 shows an embodiment analogous to the example (outside the scope of the claims) of FIG 1. However, the additional layer 203 covers the gel 200 in a pattern with a plurality or regions with different thickness than others. The embodiment shown in the figure includes some regions of the surface covered by the adhesive, while others are adhesive-free. In some embodiment, stress-minimizing patterns include kinks or interruptions. Patterns in zigzag can be used, as well as patterns studied in the publication 'Numerical investigation of a novel pattern for reducing residual stress in metal additive manufacturing, Journal of Material Science and Technology 67, August 2020'. The adhesive used to attach different parts of the package together during manufacture can be used over the gel coating, even using the same techniques and equipment and in the same manufacturing stages.

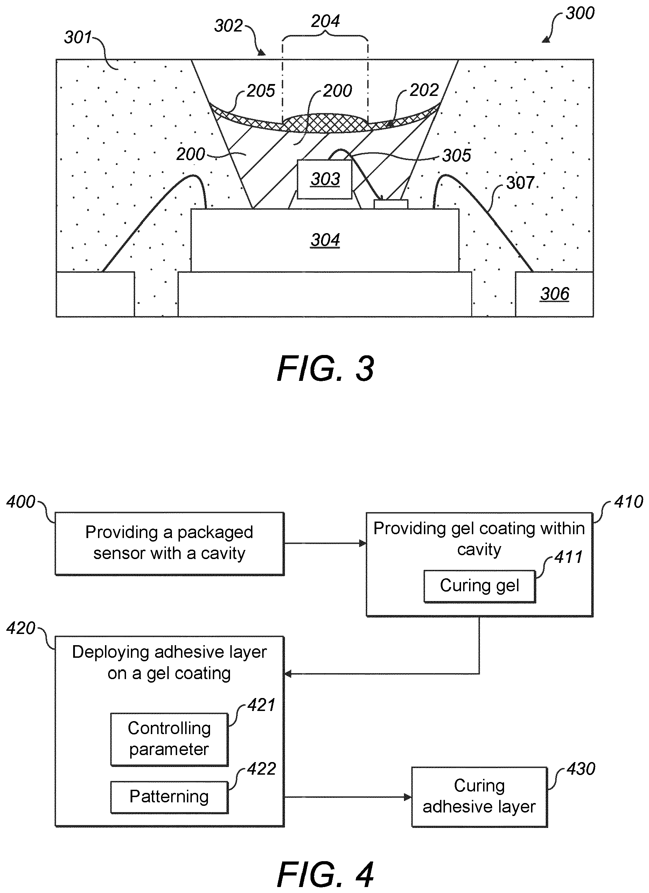

The additional layer 201 may have a homogeneous thickness. Alternatively, it may have larger thickness towards the center of the cavity 102 than in the middle. This may happen due to e.g. gravity which collects the adhesive, while still not hardened, at the deeper part of the gel coating. In alternative embodiments, the additional layer may have homogeneous thickness. However, the additional layer may be patterned purposefully with a thicker region, overlapping the relevant delicate elements (e.g. circuit elements, e.g. membrane, sensing element of the die) in the top projection thereof. This is shown in FIG 3.

FIG 3 illustrates a cross section of a packaged sensor 300 with a package 301 where a cavity 302 is formed. A sensing die 303 is provided on the processing unit 304, and they are both connected as known in the art, e.g. using a conductor 305, e.g. by wire bonding. The sensing die 303 and processing unit 304 may be attached to each other, e.g. by adhesive, which could be the same adhesive that is provided on the gel coating, the present invention not being limited thereto. The processing unit 304 is also connected to the output 306 of the package, e.g. a lead frame. This connection 307 can be provided by e.g. wire bonding.

The gel coating 200 at least partially fills the cavity 302. The pressure-receiving surface 202 of the gel coating 200 includes an area 204 which, viewed on the top projection of the cavity, surrounds the sensing die 303. An additional layer 205 of adhesive is patterned on the gel coating 200 so that its thickness is much higher on this area 204. The rest of the adhesive layer may be much thinner, for example the thickness of the thicker part could be between 1.5 and 10 times thicker than the rest; the adhesive layer has a pattern such as the one shown in FIG 2 or and, additionally, in some embodiments, the rest of the adhesive may even be absent outside that top projection of the cavity surrounding the sensing die.

In a second aspect, the present invention provides a method for manufacturing a pressure sensor. FIG 4 is a flowchart with steps of embodiments of the present invention. The method comprises providing 400 a packaged pressure sensor including a cavity with the sensing die inside, providing 410 gel coating within the cavity and optionally curing 411 of the gel coating on top of the sensing die/membrane. In some embodiments, providing a gel coating may comprise providing a coating with a thickness of at least 150 micrometres.

The method further comprises deploying 420 an adhesive layer on the gel coating. The adhesive has a higher cross-linking degree (higher cross-linking density) than the cross-linking of the gel. The added layer is much thinner than the gel coating. The parameters of the adhesive layer can be controlled 421 to fine-tune the balance between forming an effective or complete barrier to harsh media diffusion versus causing mechanical stress to the sensing die (e.g. to the sensing element and/or to the membrane). Within the scope of this invention both material choice and process parameters for the glue application process can be used for optimizing on this balance.

Deploying the adhesive layer may comprise patterning 422 the adhesive layer over the gel coating in the cavity. Patterning may include providing regions of different thickness, for example several regions with a first thickness of adhesive and other regions with a second thickness of adhesive, or no adhesive at all. The pattern may be a regular or irregular. For example, as mentioned above, patterning 422 may be done so that a large thickness of adhesive covers the top projection of the sensing die covered by the gel coating (the top projection being the projection facing the aperture of the cavity) while in the surrounding area, a lower amount of adhesive may be provided, e.g. no adhesive at all, or a thinner layer.

In some embodiments, the method comprises deploying 420 a layer with a thickness of e.g. 10 micrometres or more, up to e.g. 50 micrometres of glue.

Typical process development parameters in glue dispense equipment can be used to control the thickness of this layer. In accordance with embodiments of the present invention, any type of glue can be used, for example silicone, fluorosilicone, epoxy glue. The glue may have fillers or not inside, according to the formulation under which they are commercialized.

In some embodiments, the adhesive may chemically bind to the molecules of the top surface of the gel coating, the present invention not being limited thereto.

The method optionally comprises 430 curing the adhesive layer, e.g. using UV light.

The method in accordance with embodiments of the present invention can be carried out by already established technologies, for example deploying 420 the adhesive layer using a glue dispenser needle. Such needle can provide the required glue thickness. Additionally, the scribing profile of the dispense needle can be used for introducing shapes and patterns in the glue layer on top of the gel for mitigation of stress gradients or differences due to different expansion (caused by temperature or chemical swelling).

## Claims

1. A pressure sensor (100, 300) comprising a package (101, 301) and a sensing die (103, 303), the package comprising a cavity (102, 302), wherein the sensing die is placed within the cavity (102, 302), the sensor comprising a gel coating (200) provided inside the cavity (102, 302) covering at least the sensing die, the gel coating having a pressure-receiving surface (202), the sensor further comprising a layer (203, 205) of a polymer being in contact with the pressure-receiving surface of the gel coating, wherein the polymer is different from the material of the gel coating, the polymer of the layer (203, 205) being an adhesive, **characterized in that** the layer (203, 205) of the polymer forms a pattern on the gel coating (200).

2. The sensor in accordance with the previous claim wherein the sensing die comprises a membrane (113).

3. The sensor in accordance with any one of the previous claims wherein the layer (203, 205) is a cured glue.

4. The sensor in accordance with any one of the previous claims wherein the gel coating (200) has a thickness of at least 150 micrometers measured between the sensing die and the layer (203, 205) of polymer.

5. The sensor in accordance with any one of the previous claims wherein the layer (201) of polymer has a thickness of 10 micrometers or more up to 50 micrometers.

6. The sensor in accordance with any one of the previous claims wherein the layer (203, 205) of the polymer forms a pattern leaving a portion of the pressure-receiving surface (202) of the gel coating in contact with the environment.

7. The sensor in accordance with any one of the previous claims, wherein the gel coating (200) includes an area (204) which, viewed on the top projection of the cavity, surrounds the sensing die (303) and wherein the layer of polymer is a layer (205) of adhesive patterned on the gel coating (200) with increased thickness of the gel than outside of the area (204).

8. A method of manufacturing the sensor in accordance with any one of claims 1 to 7, the method comprising:
- providing (400) the packaged sensor with an open cavity, and the sensing die within the cavity, and
- providing (410) the gel coating inside the cavity covering at least the sensing die, the gel coating having an external surface,
- providing (420) the e layer of a polymer over and in contact with the external surface of the gel coating,
wherein the polymer is different from the gel coating, the polymer being an adhesive, **characterized in that** providing (420) the layer of polymer comprises patterning (422) the layer of the polymer.

9. The method in accordance with the previous claim wherein providing a layer of polymer comprises providing the polymer using a dispenser needle for microelectronics assembly.

10. The method in accordance with claim 7 or claim 8 further comprising curing (430) the adhesive layer.

11. The method in accordance with any one of claims 8 to 10 wherein patterning the layer of polymer comprises providing the polymer on a plurality of regions covering at least part of the top projection of the gel coating, wherein the region corresponding to the top projection of the coating covering the sensing die comprises a thicker layer of polymer than the rest of the regions.

## Patentansprüche

1. Ein Drucksensor (100, 300), der ein Gehäuse (101, 301) und einen Sensorchip (103, 303) umfasst, wobei das Gehäuse einen Hohlraum (102, 302) umfasst, wobei der Sensorchip innerhalb des Hohlraums (102, 302) angeordnet ist, wobei der Sensor eine im Inneren des Hohlraums (102, 302) bereitgestellte Gelbeschichtung (200) umfasst, die mindestens den Sensorchip bedeckt, wobei die Gelbeschichtung eine Druck aufnehmende Oberfläche (202) aufweist, wobei der Sensor weiter eine Schicht (203, 205) aus einem Polymer umfasst, die mit der Druck aufnehmenden Oberfläche der Gelbeschichtung in Kontakt steht, wobei sich das Polymer vom Material der Gelbeschichtung unterscheidet, wobei das Polymer der Schicht (203, 205) Klebstoff ist,
**dadurch gekennzeichnet, dass** die Schicht (203, 205) des Polymers ein Muster auf der Gelbeschichtung (200) bildet.

2. Der Sensor nach dem vorstehenden Anspruch, wobei der Sensorchip eine Membran (113) umfasst.

3. Der Sensor nach einem der vorstehenden Ansprüche, wobei die Schicht (203, 205) ein ausgehärteter Klebstoff ist.

4. Der Sensor nach einem der vorstehenden Ansprüche, wobei die Gelbeschichtung (200) eine Dicke von mindestens 150 Mikrometern aufweist, gemessen zwischen dem Sensorchip und der Schicht (203, 205) aus Polymer.

5. Der Sensor nach einem der vorstehenden Ansprüche, wobei die Schicht (201) aus Polymer eine Dicke von 10 Mikrometer oder mehr bis zu 50 Mikrometer aufweist.

6. Der Sensor nach einem der vorstehenden Ansprüche, wobei die Schicht (203, 205) des Polymers ein Muster bildet, das einen Abschnitt der Druck aufnehmenden Oberfläche (202) der Gelbeschichtung mit der Umgebung in Kontakt lässt.

7. Der Sensor nach einem der vorstehenden Ansprüche, wobei die Gelbeschichtung (200) einen Bereich (204) einschließt, der, vom oberen Vorsprung des Hohlraums aus betrachtet, den Sensorchip (303) umschließt, und wobei die Schicht aus Polymer eine auf der Gelbeschichtung (200) strukturierte Klebstoffschicht (205) mit gegenüber außerhalb des Bereichs (204) gesteigerter Dicke des Gels ist.

8. Ein Verfahren zum Herstellen des Sensors nach einem der Ansprüche 1 bis 7, wobei das Verfahren Folgendes umfasst:
- Bereitstellen (400) des verpackten Sensors mit einem offenen Hohlraum und dem darin befindlichen Sensorchip, und
- Bereitstellen (410) der Gelbeschichtung im Inneren des Hohlraums, die zumindest den Sensorchip bedeckt, wobei die Gelbeschichtung eine Außenfläche aufweist,
- Bereitstellen (420) der Schicht eines Polymers über und in Kontakt mit der Außenfläche der Gelbeschichtung,
wobei sich das Polymer von der Gelbeschichtung unterscheidet, wobei das Polymer ein Klebstoff ist, **dadurch gekennzeichnet, dass** Bereitstellen (420) der Polymerschicht das Strukturieren (422) der Polymerschicht umfasst.

9. Das Verfahren nach dem vorstehenden Anspruch, wobei das Bereitstellen einer Polymerschicht das Bereitstellen des Polymers unter Verwendung einer Dosiernadel für die Mikroelektronikmontage umfasst.

10. Das Verfahren nach Anspruch 7 oder 8, weiter umfassend das Aushärten (430) der Klebstoffschicht.

11. Das Verfahren nach einem der Ansprüche 8 bis 10, wobei das Strukturieren der Polymerschicht das Bereitstellen des Polymers auf einer Vielzahl von Bereichen umfasst, die mindestens einen Teil des oberen Vorsprungs der Gelbeschichtung bedecken, wobei der Bereich, der dem oberen Vorsprung der den Sensorchip bedeckenden Beschichtung entspricht, eine dickere Polymerschicht aufweist als der Rest der Bereiche.

## Revendications

1. Un capteur de pression (100, 300) comprenant un boîtier (101, 301) et une puce de détection (103, 303), le boîtier comprenant une cavité (102, 302), dans laquelle la puce de détection est placée à l'intérieur de la cavité (102, 302), le capteur comprenant un revêtement de gel (200) fourni à l'intérieur de la cavité (102, 302) couvrant au moins la puce de détection, le revêtement de gel ayant une surface de réception de pression (202), le capteur comprenant en outre une couche (203, 205) d'un polymère étant en contact avec la surface de réception de pression du revêtement de gel, dans lequel le polymère est différent du matériau du revêtement de gel, le polymère de ladite couche (203, 205) étant un adhésif, **caractérisé en ce que** ladite couche (203, 205) du polymère forme un motif sur le revêtement de gel (200).

2. Le capteur selon la revendication précédente, dans lequel la puce de détection comprend une membrane (113).

3. Le capteur selon l'une quelconque des revendications précédentes, dans lequel ladite couche (203, 205) est une colle durcie.

4. Le capteur selon l'une quelconque des revendications précédentes, dans lequel le revêtement de gel (200) a une épaisseur d'au moins 150 micromètres mesurée entre la puce de détection et ladite couche (203, 205) de polymère.

5. Le capteur selon l'une quelconque des revendications précédentes, dans lequel ladite couche (201) de polymère a une épaisseur de 10 micromètres ou plus jusqu'à 50 micromètres.

6. Le capteur selon l'une quelconque des revendications précédentes, dans lequel ladite couche (203, 205) du polymère forme un motif laissant une partie de la surface de réception de pression (202) du revêtement de gel en contact avec l'environnement.

7. Le capteur selon l'une quelconque des revendications précédentes, dans lequel le revêtement de gel (200) comprend une zone (204) qui, vue sur la projection supérieure de la cavité, entoure la puce de détection (303) et dans lequel ladite couche de polymère est une couche (205) d'adhésif formant un motif sur le revêtement de gel (200) avec une épaisseur accrue du gel par rapport à l'extérieur de la zone (204).

8. Un procédé de fabrication du capteur selon l'une quelconque des revendications 1 à 7, le procédé comprenant :
- fournir (400) le capteur emballé avec une cavité ouverte, et une puce de détection à l'intérieur de la cavité, et
- fournir (410) le revêtement de gel à l'intérieur de la cavité couvrant au moins la puce de détection, le revêtement de gel ayant une surface externe,
- fournir (420) ladite couche d'un polymère sur et en contact avec la surface externe du revêtement de gel,
dans lequel le polymère est différent du revêtement de gel, le polymère étant un adhésif, **caractérisé en ce que** fournir (420) ladite couche de polymère comprend le façonnage (422) de ladite couche du polymère.

9. Le procédé selon la revendication précédente, dans lequel fournir une couche de polymère comprend fournir le polymère à l'aide d'une aiguille de distributeur pour l'assemblage de microélectronique.

10. Le procédé selon la revendication 7 ou la revendication 8 comprenant en outre le durcissement (430) de ladite couche adhésive.

11. Le procédé selon l'une quelconque des revendications 8 à 10, dans lequel le façonnage de ladite couche de polymère comprend fournir le polymère sur une pluralité de régions couvrant au moins une partie de la projection supérieure du revêtement de gel, dans lequel la région correspondant à la projection supérieure du revêtement couvrant la puce de détection comprend une couche plus épaisse de polymère que le reste des régions.
